# EUROPÄISCHE PATENTSCHRIFT

(11) **EP 0 603 817 B1**
(45) Veröffentlichungstag und Bekanntmachung des Hinweises auf die Patenterteilung: **12.09.2001**
(21) Anmeldenummer: 93120606.4
(22) Anmeldetag: 21.12.1993
(51) Int. Cl.: G02B 6/30, G02B 6/42

(54) **Verfahren zum Verbinden von Lichtwellenleitern mit integriert optischen Bauelementen**
Process to connect lightguides with integrated optical components
Procédé pour connecter des guides d'ondes aux composants optiques intégrés

(30) Priorität: 23.12.1992 DE 4243874
(43) Veröffentlichungstag der Anmeldung: 29.06.1994
(73) Patentinhaber: FRAUNHOFER-GESELLSCHAFT ZUR FÖRDERUNG DER ANGEWANDTEN FORSCHUNG E.V., 80636 München (DE)
(72) Erfinder: Rose, Klaus, Dr. Dipl.-Chem., D-97318 Kitzingen (DE); Labs, Jürgen, Dr., D-12524 Berlin (DE); Werner, Susanne, Dipl.-Ing., D-10247 Berlin (DE)
(74) Vertreter: Pfenning, Meinig & Partner

(56) Entgegenhaltungen:
- EP-A- 0 450 624
- EP-A- 0 455 090
- IEEE PHOTONICS TECHNOLOGY LETTERS Bd. 4, Nr. 8 , August 1992 , NEW YORK US Seiten 906 - 908 Y. YAMADA ET AL. 'Low-Loss and Stable Fiber-to-Waveguide Connection Utilizing UV Curable Adhesive'

## Beschreibung

Die Erfindung betrifft ein Verfahren zur Koppelung von Lichtwellenleitern mit integriert optischen Bauelementen mit speziellen Polykondensaten des Siliciums als Verbindungsmaterial.

Für die Herstellung von Fasersensoren und integriert optischen Sensoren sowie in der Nachrichten- und Steuerungstechnik auf der Basis von Lichtleitung spielt die Verbindungstechnik, d.h. die Koppelung von Lichtwellenleitern mit integriert optischen Bauelementen eine zentrale Rolle. Der Lichtwellenleiter (LWL) wird dabei an andere Bauteile, die der Signalweiterleitung, Signalverstärkung oder der Signalumwandlung dienen, angekoppelt. Es werden somit unterschiedlichste Materialien miteinander verbunden, wobei die Zuverlässigkeit der Verbindung für den jeweiligen Einsatzbereich gewährleistet sein muß. Bei der Kopplung von LWL mit integriert optischen Bauelementen (IOC) werden z.Z. hauptsächlich UV-härtbare Epoxidkleber eingesetzt. Dadurch soll sichergestellt werden, daß sich die unterschiedlichsten Werkstoffe verbinden lassen und daß keine Beeinträchtigung der Fügeteile auftritt. Epoxidkleber weisen zudem günstige optische Eigenschaften auf.

Die bisherigen kommerziell erhältlichen organischen Polymerkleber weisen jedoch gravierende Nachteile auf.

Nachteilig ist vor allem die geringe thermische Stabilität. Im Regelfall erweichen nämlich die Klebestellen bei Temperaturen größer als 80°C. Dies hat zur Folge, daß der LWL dejustiert wird. Diese Dejustierung des LWL geht mit einer erhonten Lichtdämpfung einher. Weiter nachteilig bei den bisher verwendeten organischen Polymerklebern ist die hche Wasseraufnahme und die damit verbundene Fiskristallbildung bei Temperaturen bis ca. minus 40°C. Besonders diese Eiskristallbildung bei tiefen Temperaturen wirkt sich unter anderem auch auf die mechanischen und optischen Eigenschaften sehr nachteilig aus. Ungünstig bei den bisher verwendeten organischen Polymerklebern ist weiterhin, daß eine Zunahme der Lichtdämpfung auch bei Temperaturen von -5°C bis ca. +10°C vorliegt.

Die EP-A-0450624 beschreibt organische Gruppen enthaltende Polykondensate auf der Basis von auf hydrolytischem Wege kondensierten Verbindungen des Siliciums und gegebenenfalls anderer Elemente aus der Gruppe B, Al, P, Sn, Pb, der Übergangsmetalle, der Lanthaniden und der Aktiniden zur Verwendung als Klebstoff und ihr Einsatz für optische, optoelektrische oder elektronische Komponenten.

Die EP-A-0455090 beschreibt die Verbindung von Lichtwellenleitern mit integrierten optischen Bauelementen mittels UV-härtbarer Klebstoffe.

Hier setzt die vorliegende Erfindung ein, deren Aufgabe es ist, ein Verfahren zum Verbinden von LWL mit IOC anzugeben, mit dem Verbindungsstellen realisiert werden können, die eine hohe Temperaturstabilität, eine geringe Wasseraufnahme und eine damit verbundene geringe Eiskristallbildung besitzen. Das Verfahren soll zudem geeignet sein, die unterschiedlichsten Materialien miteinander zu verbinden.

Die Aufgabe wird durch die kennzeichnenden Merkmale des Anspruches 1 gelöst. Vorteilhafte Weiterbildungen sind in den abhängigen Ansprüchen angegeben.

An das Verbindungsmaterial für die Koppelung von LWLs und IOCs werden in bezug auf die chemische und thermische Stabilität sowie auf die optischen Eigenschaften höchste Anforderungen gestellt, die durch die bisherigen Exopidkleber nur teilweise erfüllt werden. Insbesondere ist es wichtig, daß ein geringer Volumenschwund und eine ausreichende Festigkeit der Verbindung beim Verkleben erzielt wird. Aufgrund der unterschiedlichen optoelektronischen Anwendungen werden zum Verbinden von LWLs mit IOCs die unterschiedlichsten Materialien benötigt. Hierzu zählen insbesondere Kieselglas, Lithiumniobat, Silicium, InP, GaAS, Glas oder auch Polymere. Das Verbindungsmaterial muß in der Lage sein, diese unterschiedlichsten Materialien mit dem LWL zu verbinden, wobei eine gleichzeitige gute Elastizität gefordert ist, um Spannungen bei thermischer Belastung abzubauen. Das Verbindungsmaterial muß weiterhin chemisch und thermisch stabil sein (bis zu 150°C). Weiter ist gefordert, daß das Verbindungsmaterial schnell bei niedrigen Temperaturen (kleiner als 250°C) aushärtet und eine gute Verarbeitbarkeit aufweist. Bei den optischen Eigenschaften ist wichtig, daß das Verbindungsmaterial einen Brechungsindex aufweist, der zwischen dem der Koppelpartner liegt. Weiterhin ist wichtig, daß der für die Übertragung von optischen Signalen relevante Transparenzbereich im Wellenlängenbereich von 700 nm bis 1800 nm liegt.

Überraschenderweise hat sich nun gezeigt, daß beim erfindungsgemäßen Verfahren durch die Verwendung von speziellen Polyacrylatsiloxan-Harzen, eine Verbindung entsteht, die alle diese Forderungen ausgezeichnet erfüllt. Erfindungsgemäß wird dazu die zum Verkleben vorgesehene Stelle mit speziellen Polyacrylatsiloxan-Harzen als dämpfungsverlustarmes Verbindungsmaterial versehen.

Erfindungsgemäß ist das Verbindungsmaterial eine Verbindung mit der allgemeinen Formel 1: 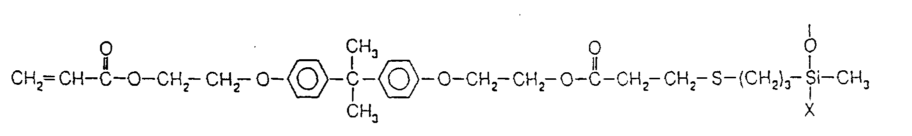 wobei X = O oder Ch₃ ist.

Diese Verbindungstypen haben sich insbesondere bezüglich ihrer mechanischen Eigenschaften als besonders überlegen gegenüber dem Stand der Technik erwiesen.

Diese Verbindungsklasse zeichnet sich besonders dadurch aus, daß der organische Rest variiert werden kann, so daß ein entsprechendes Polymer mit gewünschten Eigenschaften hergestellt werden kann. Es hat sich nun überraschenderweise gezeigt, daß diese Polykondensate auch in bezug auf die optischen Eigenschaften alle gestellten Anforderungen erfüllen. Besonders vorteilhaft ist es, daß sich das Eigenschaftspotential durch Kombination mit anderen nach dem Sol-Gel-Verfahren herstellbaren Materialien (Silan-, Al-, Ti-Verbindungen, usw.) oder mit anderen copolymerisierbaren organischen Verbindungen erweitern läßt, ohne daß dabei die optischen Eigenschaften, insbesondere die Transmission in den für die optischen Anwendungen interessierenden Bereich beeinträchtigt wird.

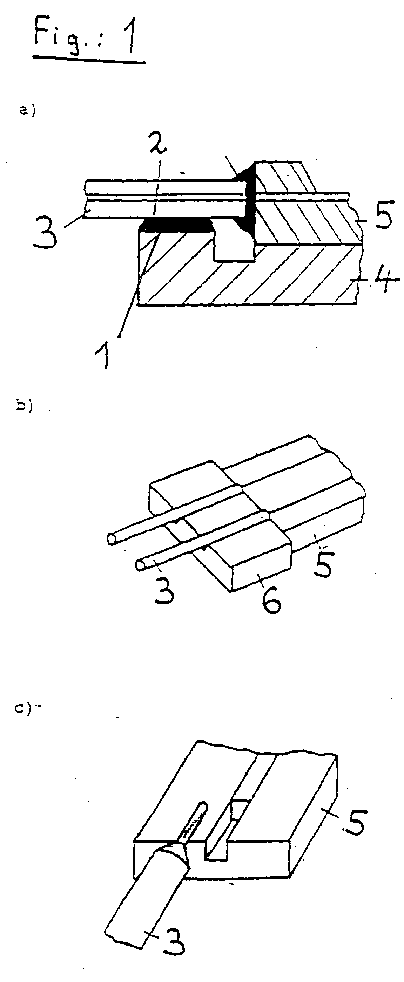

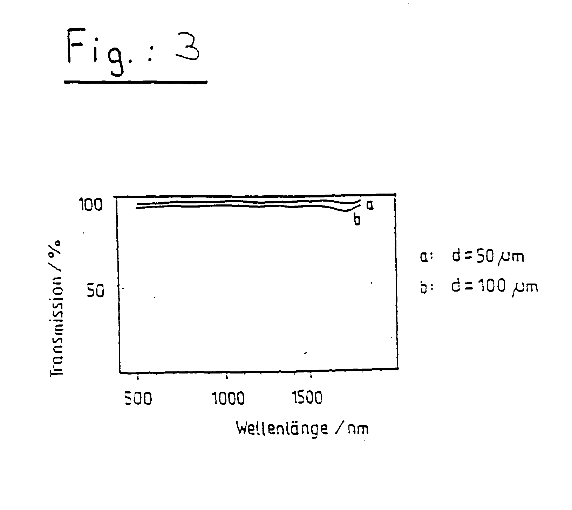

Das erfindungsgemäße Verfahren ist dabei auf alle bisher bekannten Methoden zur LWL/IOC-Kopplung anwendbar. Die Kopplung kann dabei entweder nach dem Pick-and-place-Verfahren, Mehrchip-Verfahren oder nach dem Einchip-Verfahren (siehe Fig. 1a bis 1c) durchgeführt werden. Das erfindungsgemäße Verfahren ist in bezug auf alle diese drei gängigen Methoden anwendbar. Bevorzugt ist dabei, wenn die für die Klebung vorgesehenen Stellen mit dem Verbindungsmaterial beschichtet werden und nur eine sehr kurze Aushärtung unter Zuhilfenahme von geeigneten Thermo- oder Fotoinitiatoren erfolgt. Es hat sich dabei gezeigt, daß es ausreichend ist, wenn die Aushärtezeit maximal 1 min. beträgt. Durch Versuche konnte gezeigt werden, daß selbst bei Aushärtezeiten von 20 s ausgezeichnete Ergebnisse erzielt werden (siehe Fig. 3). Als geeignete Fotoinitiatoren können alle im Handel erhältlichen eingesetzt werden. Beispiele hierfür sind: Irgacure 184, Irgacure 500 und andere von der Firma Ciba-Geigy erhältliche Fotoinitiatoren vom Irgacure-Typ. Die Erfindung schließt hier alle auch in der EP 0 450 624 genannten Fotoinitiatoren mit ein. Bezüglich der thermischen Initiatoren können insbesondere organische Peroxide in Form von Diacylperoxiden oder Peroxydcarbonaten eingesetzt werden. Weitere thermische Initiatoren sind ebenfalls in der EP 0 450 624 offenbart. Die Erfindung schließt auch alle diese Initiatoren mit ein. Die Aushärtung kann dabei grundsätzlich entweder fotochemisch oder auf thermischem Wege erfolgen.

Die mit dem erfindungsgemäßen Verfahren hergestellten Verbindungen der LWLs mit den IOCs weisen demnach mehrere Vorteile auf:
1. Es ist eine gezielte Variation von organischen und anorganischen Bausteinen in den Precusor-Molekülen und damit eine gezielte Einstellung von mechanischen und optischen Eigenschaften möglich (z.B. Elastizität, Brechungsindex und Festigkeit im gehärteten Material).
2. Es läßt sich das Eigenschafts-Potential durch Kombination mit anderen nach dem Sol-Gel-Verfahren herstellbaren Materialien erweitern (hierzu gehören Silan-, Al- oder z.B. Ti-Verbindungen).
3. Es ist ein deutlich besseres thermisches Verhalten als bei rein organischen Klebematerial erzielbar.
4. Das erfindungsgemäße Verfahren und die hergestellten Klebeverbindungen weisen eine geringe Wasseraufnahme und damit geringere Eiskristallbildung auf, so daß auch der Einsatz bei tiefen Temperaturen ohne Dämpfungsverlust möglich ist.

Letztlich betrifft die Erfindung auch noch die Verwendung der oben beschriebenen Polyacrylatsiloxan-Harze als dämpfungsverlustarmes Verbindungsmaterial. Erfindungsgemäß wurde erstmalig überraschenderweise gefunden, daß das oben beschriebene Verbindungsmaterial als dämpfungsverlustarmes Verbindungsmaterial für die Koppelung von Lichtwellenleitern mit integriert optischen Bauteilen eingesetzt werden kann. Es hat sich dabei gezeigt, daß sämtliche geforderten Eigenschaften von diesem Verbindungsmaterial hervorragend erfüllt werden.

Die Erfindung wird anhand von sechs Figuren und einem Ausführungsbeispiel näher erläutert:
- Fig. 1: zeigt die LWL/IOC-Koppelung nach folgendem Verfahren:
a) Pick-and-place-Verfahren,
b) Mehrchip-Verfahren,
c) Einchip-Verfahren.
- Fig. 2: zeigt das Prinzip der Dämpfungsmessung nach der Abscheidemethode.
- Fig. 3: zeigt die Transmission der Verbindungsmaterialien.
- Fig. 4: zeigt das thermische Verhalten der Verbindungsmaterialien.

### Beispiel

Es wird nach dem Pick-and-place-Verfahren eine Verbindung zwischen einem Lichtwellenleiter und einer integriert optischen Bauelement hergestellt (Fig. 1a). Als Verbindungsmaterialien werden die in der Beschreibung als bevorzugt ausgewählten Verbindungen der Formel 1 eingesetzt. Die Aushärtung wird mittels UV-Strahlung vorgenommen. Die Aushärtezeit beträgt 20 s, wobei die Strahlungsleistung 1,1 W UV-A und 0,35 W UV-B ist.

In Fig. 1 sind in Form einer Prinzipskizze die drei aus dem Stand der Technik bekannten Methoden zur LWL/IOC-Koppelung dargestellt. Fig. 1a zeigt das Pick-and-place-Verfahren. Erfindungsgemäß wird dazu an der zur Verbindung vorgesehenen Stelle 1 das Verbindungsmaterial 2 aufgetragen. Der Lichtwellenleiter 3 wird dann in die dafür vorgesehene Stelle eingelegt. Im Beispielsfall stellt 4 eine Montageplatte und 5 den Streifenwellenleiter dar. Fig. 1b zeigt das Mehrchip-Verfahren. Hier wird im Prinzip genauso vorgegangen, nur daß der Lichtwellenleiter 3 in einem Siliciumsubstrat mit V-Nuten 6 eingelegt wird. Ein analoges Verfahren ist in Fig. 1c dargestellt (Einchip-Verfahren). Hierbei wird ebenfalls der Lichtwellenleiter 3 in den Streifenwellenleiter 5 eingelegt und die Verklebung an der dafür vorgesehenen Stelle mit dem erfindungsgemäßen Material bewerkstelligt.

Es hat sich dabei gezeigt, daß die nach dem erfindungsgemäßen Verfahren hergestellten Verbindungen ausgezeichnete mechanische und optische Eigenschaften aufweisen.

In **Tabelle 1** sind die entsprechenden Meßwerte angeführt.

| Siloxansystem | E-Modul/MPa | n | Volumenschrumpf V₀-V/V₀/% |
|---|---|---|---|
| (1) mit X=0 | 20 | 1,56 | 2-3 |
| (1) mit X=CH₃ | 10 | 1,56 | 2-3 |

Tabelle 1 zeigt sehr nachhaltig, daß alle Verklebungen ein sehr günstiges E-Modul und einen äußerst geringen Volumenschrumpf aufweisen.

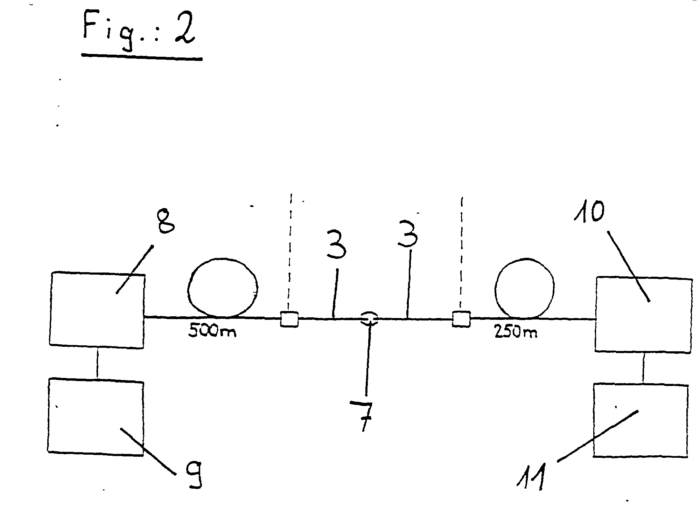

Die Dämpfungsmessungen wurden nach der Abschneidemethode an Multimodefasern durchgeführt. Die entsprechende Vorrichtung ist in Fig. 2 dargestellt. Zur Messung werden zwei Lichtwellenleiter 3 über eine Klebestelle 7 verbunden. Die Messung wird dabei mit einem Sender 8, der mit einem Netzgerät 9 in Verbindung steht, und einem Empfänger 10, der über ein Meßgerät 11 verbunden ist, durchgeführt. Die Dämpfungswerte für die mit dem erfindungsgemäßen Verfahren hergestellten Verbindungen waren < 0,3 dB pro Verbindungsstelle. Die gemessenen Dämpfungswerte bleiben auch nach Temperaturwechselbehandlung unverändert (Tabelle 2).

**Tabelle 2 -**

| Temperaturwechselbelastungstest nach DIN IEC 68-2-14 | | | | |
|---|---|---|---|---|
| Zyklus | Tₘᵢₙ/°C | Tₘₐₓ/°C | 5_{Halt}/min | Zyklenanzahl |
| I | -20 | 60 | 30 | 2 |
| II | -40 | 80 | 30 | 10 |
| III | -20 | 60 | 5 | 200 |

Fig. 3 zeigt die Transmission der erfindungsgemäßen Verbindungsstellen. IR-spektroskopische Messungen zeigen bei Schichtdicken von 50 *µ*m im Wellenlängenbereich 700 bis 1800 nm 95 % Transmission und sind deshalb für Anwendungen im optoelektronischen Bereich bestens geeignet.

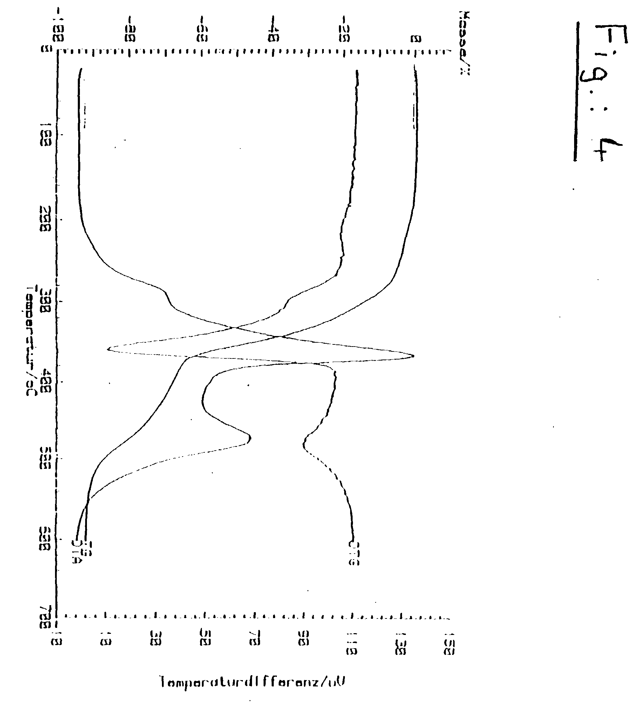

Fig. 4 zeigt das thermische Verhalten der erfindungsgemäß eingesetzten Verbindungsmaterialien. Fig. 4 zeigt den für alle Verbindungsmaterialien typischen Verlauf der Differentialthermo-Analyse (DTA), Thermogravimetrie (TG) und der differenzierten Thermogravimetrie (DTG). Es hat sich dabei gezeigt, daß keine Phasenumwandlung der Systeme erfolgt. Weiterhin korrelieren die exothermen Reaktionen (DTA) mit dem Massenverlust infolge der Kondensation von Silanolgruppen und damit verbundener H₂O-Abspaltung bei 170°C und oxidativer Zersetzung ab 280°C.

Die thermische Stabilität ist somit bis mindestens 150° gewährleistet, wahrscheinlich sogar bis über 200°C. Damit wird eine wesentliche Verbesserung gegenüber den herkömmlichen Klebern erreicht.

## Patentansprüche

1. Verfahren zum Verbinden von Lichtwellenleitern (3) mit integriert optischen Bauelementen, wobei die zur Verklebung vorgesehenen Stellen (1) mit aushärtbarem Verbindungsmaterial (2) versehen werden, der Lichtwellenleiter ins Verbindungmaterial eingelegt und anschließend das Verbindungsmaterial (2) durch Bestrahlung und/oder thermische Energie ausgehärtet wird,
**dadurch gekennzeichnet, daß**
die zur Verklebung vorgesehenen Stellen (1) mit organische Gruppen enthaltenden Polykondensaten auf der Basis von hydrolytisch kondensierten Verbindungen des Siliciums und gegebenenfalls anderen Elementen aus der Gruppe B, Al, P, Sn, Pb, der Übergangsmetalle, der Lanthaniden und der Aktiniden als Verbindungsmaterial versehen werden, wobei das Polykondensat eine Verbindung der allgemeinen Formel (1) ist: 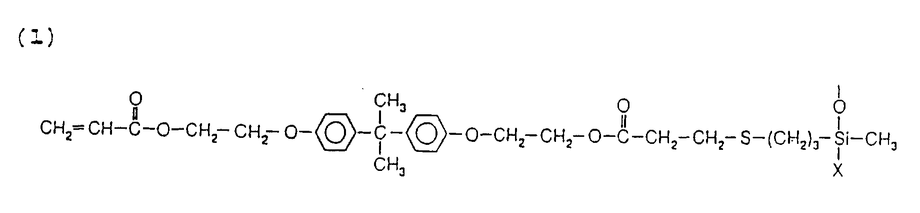 in der X = O oder CH₃ ist.

2. Verfahren nach Anspruch 1,
**dadurch gekennzeichnet, daß** das Polykondensat ausgewählt wird in Abhängigkeit der geforderten mechanischen und optischen Eigenschaften, wie z.B. Elastizität, Brechungsindex oder Festigkeit in gehärtetem Material.

3. Verfahren nach einem der vorhergehenden Ansprüche,
**dadurch gekennzeichnet, daß** während des Aushärtevorganges durch Bestrahlung und/oder thermische Energie ein an sich bekannter geeigneter Fotoinitiator bzw. thermischer Initiator zugesetzt wird.

4. Verfahren nach einem der vorhergehenden Ansprüche,
**dadurch gekennzeichnet, daß** die Aushärtezeit maximal 1 min. ist.

## Claims

1. Method for connecting optical waveguides (3) to integrated optical components, the positions (1) intended for the adhesive bonding being provided with curable connecting material (2), the optical waveguide being put into the connecting material and the connecting material (2) being subsequently cured by irradiation and/or heat energy, **characterized in that** the positions (1) intended for the adhesive bonding are provided with polycondensates which contain organic groups and are based on hydrolytically condensed compounds of silicon and optionally other elements from the group B, Al, P, Sn, Pb, the transition metals, the lanthanides and the actinides as the connecting material, the polycondensate being a compound of the general formula (1): 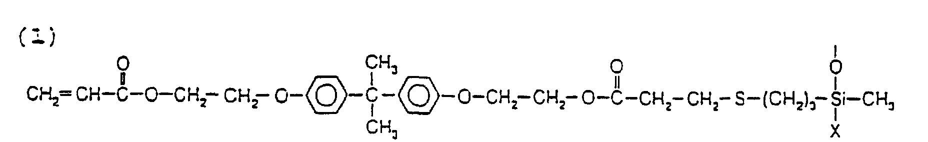 in which X = O or CH₃.

2. Method according to Claim 1, **characterized in that** the polycondensate is selected as a function of the required mechanical and optical properties, such as e.g. elasticity, refractive index or strength in the cured material.

3. Method according to one of the preceding claims, **characterized in that** during the process of curing by irradiation and/or heat energy, a suitable photoinitiator or thermal initiator known per se is respectively added.

4. Method according to one of the preceding claims, **characterized in that** the curing time is at most 1 min.

## Revendications

1. Procédé pour connecter des guides d'ondes optiques (3) comportant des composants optiques intégrés, selon lequel on prévoit un matériau de liaison
durcissable (2) sur les emplacements (1) prévus pour le collage, on insère le guide d'ondes optiques dans le matériau de liaison et ensuite on fait durcir le matériau de liaison (2) par irradiation et/ou à l'aide d'une énergie thermique, **caractérisé en ce qu'**on applique comme matériau de liaison, aux emplacements (1) prévus pour le collage, des polycondensats contenant des groupes organiques et formés à base de composés condensés par voie hydrolytique du silicium et éventuellement d'autres éléments tirés du groupe B, Al, P, Sn, Pb, les métaux de transition, les lanthanides et les actinides, le polycondensat répondant à la formule générale (1) : 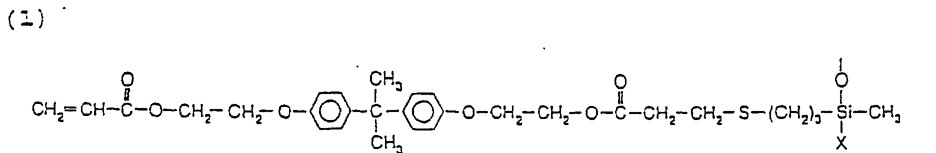 dans laquelle X = O ou CH₃.

2. Procédé selon la revendication 1, **caractérisé en ce qu'**on sélectionne le polycondensat en fonction des propriétés mécaniques et optiques requises, telles que par exemple l'élasticité, l'indice de réfraction ou la solidité dans le matériau durci.

3. Procédé selon l'une des revendications précédentes, **caractérisé en ce que** pendant l'opération de durcissement par irradiation et/ou apport d'énergie thermique, on ajoute un photo-initiateur approprié ou un initiateur thermique, connu en soi.

4. Procédé selon l'une des revendications précédentes, **caractérisé en ce que** la durée de durcissement est égale au maximum à 1 mn.
